(19) Europäisches Patentamt
European Patent Office
Office européen des brevets

(11) **EP 4 124 173 A1**

(12) **EUROPEAN PATENT APPLICATION**
published in accordance with Art. 153(4) EPC

(43) Date of publication:
**25.01.2023 Bulletin 2023/04**

(21) Application number: **21771773.5**

(22) Date of filing: **12.02.2021**

(51) International Patent Classification (IPC):
**H05B 3/10** *(2006.01)*    **H05B 3/20** *(2006.01)*
**G07C 5/00** *(2006.01)*

(52) Cooperative Patent Classification (CPC):
**G07C 5/00; H05B 3/10; H05B 3/20**

(86) International application number:
**PCT/JP2021/005248**

(87) International publication number:
**WO 2021/186972 (23.09.2021 Gazette 2021/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.03.2020   JP 2020049577
13.07.2020   JP 2020119637**

(71) Applicant: **Kurabe Industrial Co., Ltd.
Hamamatsu-shi, Shizouka 432-8521 (JP)**

(72) Inventors:
• **TOMINAGA, Kengo
  Hamamatsu-shi, Shizuoka 432-8521 (JP)**
• **TATSUGUCHI, Naoya
  Hamamatsu-shi, Shizuoka 432-8521 (JP)**
• **TAKEDA, Hiroya
  Hamamatsu-shi, Shizuoka 432-8521 (JP)**

(74) Representative: **Winter, Brandl - Partnerschaft
mbB
Alois-Steinecker-Straße 22
85354 Freising (DE)**

(54) **CORD-SHAPED HEATER AND PLANAR HEATER**

(57)    A cord-shaped heater having: a conductive wire 5 and a heat fusion layer 9 formed on an outer periphery of the conductive wire, wherein the heat fusion layer is formed of an aliphatic polyamide-based polymer material. A cord-shaped heater, having: a conductive wire; and a heat fusion layer formed on an outer periphery of the conductive wire, wherein the heat fusion layer is a polyamide-based thermoplastic elastomer. A sheet-shaped heater, wherein the cord-shaped heater is arranged on a substrate.

Fig. 1

**Description**

TECHNICAL FIELD

The present invention relates to a cord-shaped heater and a sheet-shaped heater using the cord-shaped heater. The cord-shaped heater and the sheet-shaped heater can be suitably used for an electric blanket, an electric carpet, a car seat heater and a steering heater, for example. In particular, the present invention relates to the cord-shaped heater and the sheet-shaped heater having high peeling strength at high temperature.

BACKGROUND ART

In general, a cord-shaped heater used for various heaters and the like is known to be formed by spirally winding a conductive wire (i.e., resistor) around a core wire and coating them with an outer cover made of an insulation body layer. Here, copper wire and nickel-chromium alloy wire and the like are used for the conductive wire, and the conductive wire is formed by arraying or twisting a plurality of conductive wires together. In the above described conductive wires, the configuration of forming insulating films on each of the conductive wires to insulate the conductive wires with each other is conventionally known. In addition, the configuration of forming a heat-fused portion on an outer periphery of the conductive wires or an outer periphery of the insulation body layer is conventionally known. For example, a method of forming a sheet-shaped heater by arranging a cord-shaped heater on a substrate such as a nonwoven fabric, an aluminum foil and polymeric foam and heating and pressing it for heat-fusing the cord-shaped heater and the substrate with each other is conventionally known (e.g., shown in Patent Document 1 to Patent Document 8).

PRIOR ART DOCUMENTS

[Patent Documents]

[Patent document 1] Japanese Patent No. 4202071: KURABE INDUSTRIAL CO., LTD.
[Patent document 2] Japanese Unexamined Patent Application Publication No. S61-47087: Matsushita Electric Industrial Co., Ltd.
[Patent document 3] Japanese Unexamined Patent Application Publication No. 2008-311111: KURABE INDUSTRIAL CO., LTD.
[Patent document 4] Japanese Unexamined Patent Application Publication No. 2010-15691: KURABE INDUSTRIAL CO., LTD.
[Patent document 5] International Publication No. WO2011/001953: KURABE INDUSTRIAL CO., LTD.
[Patent document 6] International Publication No. WO2014/103981: KURABE INDUSTRIAL CO., LTD.
[Patent document 7] Japanese Unexamined Patent Application Publication No. 2014-143175: KURABE INDUSTRIAL CO., LTD.
[Patent document 8] Japanese Patent No. 4118878: W.E.T. Automotive Systems AG

DISCLOSURE OF THE INVENTION

[Problems to be Solved by the Invention]

The cord-shaped heater and the sheet-shaped heater described in the above described Patent Documents have the following problems. When heating the sheet-shaped heater, it is required to reach a target temperature as early as possible by heavily heating the sheet-shaped heater at the beginning. This is particularly significant when using the sheet-shaped heater for a vehicle seat heater. At that time, the time required for transferring the heat to the occupant and the heat absorption absorbed by the surrounding members should be also considered. Thus, the surface of the cord-shaped heater may be instantaneously 120°C or more in some cases. Also in such a case, the fusion between the cord-shaped heater and the substrate should be maintained. The cord-shaped heater should not be peeled and should not be displaced. If the cord-shaped heater is peeled or displaced, the heated object cannot be evenly heated and there is a risk of partially causing abnormal heating. In the conventional cord-shaped heater and sheet-shaped heater, the peeling strength at high temperature is not considered sufficiently.

The present invention aims for solving the above described problem of the conventional technology. The present invention provides a cord-shaped heater and a sheet-shaped heater using the cord-shaped heater having high peeling strength at high temperature.

[Means for Solving the Problem]

For achieving the above described purposes, a cord-shaped heater of the present invention has: a conductive wire; and a heat fusion layer formed on an outer periphery of the conductive wire, wherein the heat fusion layer is formed of an aliphatic polyamide-based polymer material.

In addition, a cord-shaped heater of another embodiment of the present invention has a conductive wire; and a heat fusion layer formed on an outer periphery of the conductive wire, wherein the heat fusion layer is a polyamide-based thermoplastic elastomer.

In addition, the sheet-shaped heater of the present invention is characterized in that the above described cord-shaped heater is arranged on a substrate.

[Effects of the Invention]

In the cord-shaped heater of the present invention, since the aliphatic polyamide-based polymer material is used as the heat fusion layer, the adhesiveness is maintained even at high temperature. Thus, excellent peeling strength can be obtained. In particular, when the polyamide-based thermoplastic elastomer is used, more excellent peeling strength can be obtained.

BRIEF DESCRIPTION OF THE DRAWINGS

Fig. 1 is a drawing showing an embodiment of the present invention, and is a partially cutaway side view showing a configuration of a cord-shaped heater.

Fig. 2 is a drawing showing an embodiment of the present invention, and is a plan view showing a configuration of a sheet-shaped heater.

Fig. 3 is a drawing showing an embodiment of the present invention, and is a drawing showing a configuration of a hot press-type heater manufacturing apparatus.

Fig. 4 is a drawing showing an embodiment of the present invention, and is a partial perspective view showing a state that the cord-shaped heater is arranged in a predetermined pattern.

Fig. 5 is a drawing showing another embodiment of the present invention, and is a partially cutaway side view showing a configuration of the cord-shaped heater.

Fig. 6 is a drawing showing another embodiment of the present invention, and is a partially cutaway side view showing a configuration of the cord-shaped heater.

Fig. 7 is a SEM image showing a cross-section of the sheet-shaped heater of an embodiment of the present invention.

Fig. 8 is a SEM image showing a cross-section of the sheet-shaped heater of an embodiment of the present invention.

Fig. 9 is a SEM image showing a cross-section of the sheet-shaped heater of a comparative example 1 of the present invention.

Fig. 10 is a SEM image showing a cross-section of the sheet-shaped heater of a comparative example 1 of the present invention.

Fig. 11 is a SEM image showing a cross-section of the sheet-shaped heater of a comparative example 2 of the present invention.

Fig. 12 is a SEM image showing a cross-section of the sheet-shaped heater of a comparative example 2 of the present invention.

Fig. 13 is a SEM image showing a cross-section of the sheet-shaped heater of a comparative example 3 of the present invention.

Fig. 14 is a SEM image showing a cross-section of the sheet-shaped heater of a comparative example 3 of the present invention.

Fig. 15 is a partially cutaway perspective view showing a state that the sheet-shaped heater of the present invention is embedded in a vehicle seat.

MODES FOR CARRYING OUT THE INVENTION

Hereafter, the embodiments of the present invention will be explained with reference to the drawings. In these embodiments, the present invention is used as a sheet-shaped heater and the sheet-shaped heater is assumed to be applied to a steering heater of the vehicle, as an example.

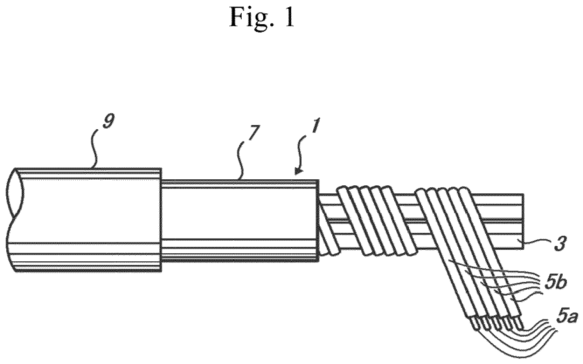

First, the present embodiment will be explained referring to Figs. 1 to 4. The configuration of a cord-shaped heater 10 of the present embodiment will be explained. The cord-shaped heater 1 of the present embodiment has the configuration shown in Fig.1. A core wire 3 formed of an aromatic polyamide fiber bundle having an external diameter of approximately 0.2 mm is provided. Three to seven conductive wires 5a, which are formed of a hard copper alloy wire having a strand diameter of approximately 0.05 mm to 0.10 mm and including a tin, are spirally wound at a pitch of about 0.6 mm to 1.6 mm around an outer periphery of the core wire 3 in a state of being arrayed together. On the conductive wires 5a, an insulating film 5b containing a silicone is formed with a thickness of approximately 8 $\mu$m by applying an alkyd silicone varnish (alkyd : silicone = 50 : 50) and drying it. The conductive wires 5a is wound around the core wire 3 and then a fluorine resin (melting temperature: 265°C) is extruded and covered with a thickness of 0.15 mm on an outer periphery of the wound conductive wires 5a as an insulation layer 7. A polyamide-based thermoplastic elastomer (melting temperature: 159°C) is extruded and covered with a thickness of 0.175 mm on an outer periphery of the insulation layer 7 as a heat fusion layer 9. The cord-shaped heater 1 has the configuration described above and has a finished outer diameter of 1.1 mm. Although the above described core wire 3 is effective when bendability and tensile strength is considered, a plurality of conductive wires can be used in a state of being arrayed together or twisted without using the core wire 3.

Next, the configuration of a substrate 11 to which the above described cord-shaped heater 10 is adhered and fixed will be explained. The substrate 11 of the present embodiment is formed of a nonwoven fabric (areal density: 150 g/m$^2$, thickness: 0.6 mm). The nonwoven fabric is formed by mixing 10% of a heat-fusing fiber having a core-sheath structure and 90% of a flame retardant fiber that is formed of a flame retardant polyester fiber. In the core-sheath structure of the heat-fusing fiber, a low-melting polyester is used as a sheath component. The nonwoven fabric is obtained by melt-extruding and spinning the material of the fiber and laminating it to form a web. The nonwoven fabric is composed of long fiber. The long fiber means a continuous fiber without having a fiber length. The long fiber is also referred to as a filament.

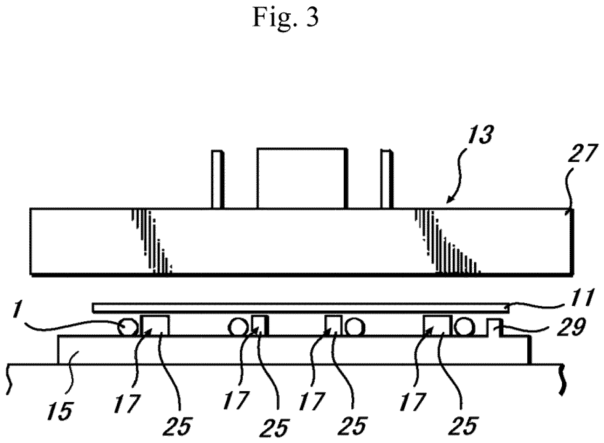

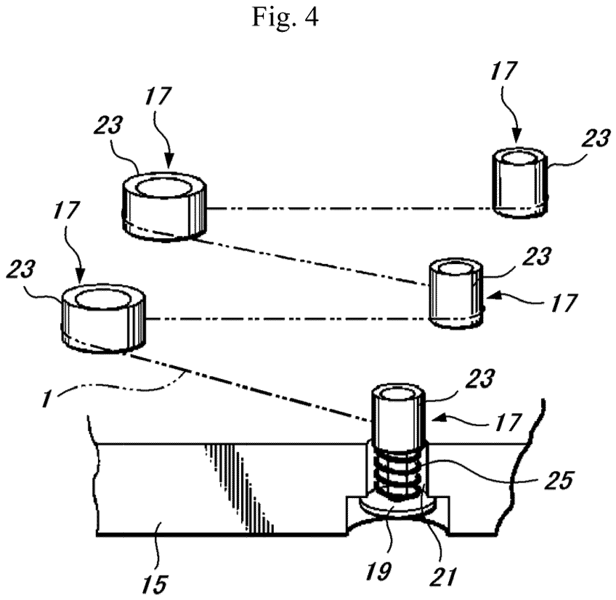

Next, the configuration of arranging the cord-shaped heater 1 on the substrate 11 in a predetermined pattern shape, bonding and fixing them with each other will be explained. Fig. 3 is a drawing showing the configuration of a hot press-type heater manufacturing apparatus 13 for heating and pressing the substrate on which the cord-shaped heater 1 is arranged. A hot pressing jig 15 is prepared and a plurality of locking mechanisms 17 is provided on the hot pressing jig 15. As shown in Fig. 4, the locking mechanisms 17 have pins 19. The pins 19 are inserted from below into holes 21 bored on the hot pressing jig 15. Locking members 23 having a needle shape at the tip are mounted on an upper part of the pins 19 movably in an axial direction. The locking members 23 are always biased upward by coil springs 25. As shown by a virtual line in Fig. 4, the cord-shaped heater 1 is arranged on the substrate 11 of one side in a predetermined pattern shape by hooking the cord-shaped heater 1 on a plurality of the locking members 23 of a plurality of the locking mechanisms 17.

As shown in Fig. 3, a press hot plate 27 is arranged above the plurality of locking mechanisms 17 so as to be raised and lowered. In other words, the cord-shaped heater 1 is arranged in a predetermined pattern shape by hooking the cord-shaped heater 1 on a plurality of the locking members 23 of the locking mechanisms 17, and then the substrate 11 is placed on that. In that state, the press hot plate 27 is lowered so as to heat and press the cord-shaped heater 1 and the substrate 11. Consequently, the heat fusion layer 9 of the cord-shaped heater 1 is fused. Thus, the cord-shaped heater 1 and the substrate 11 are bonded and fixed with each other. Note that, when the press hot plate 27 is lowered for heating and pressing, a plurality of locking members 23 of the locking mechanisms 17 is moved downward against the energizing force of the coil springs 25.

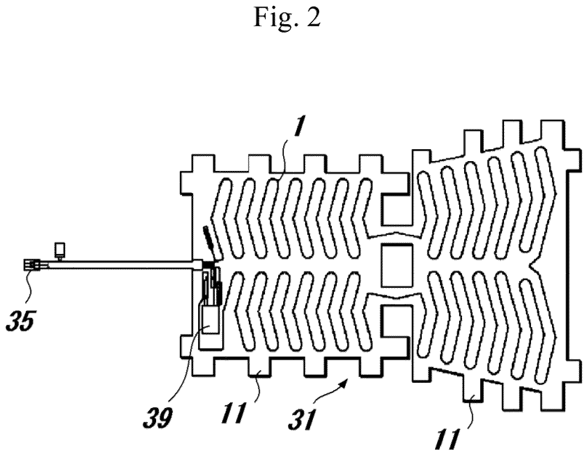

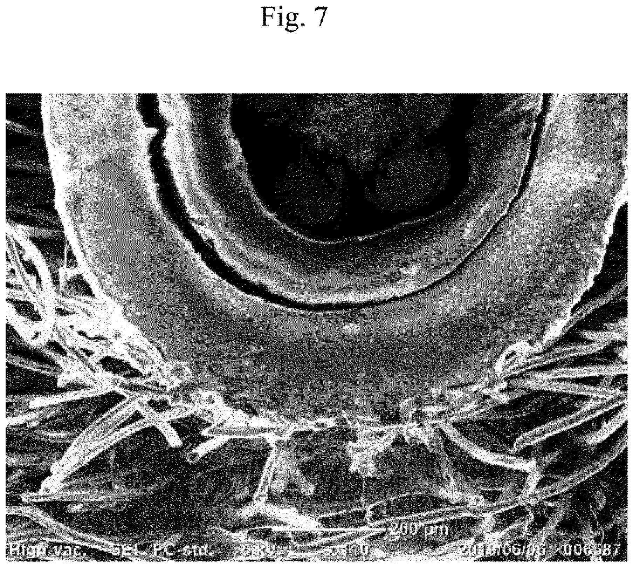

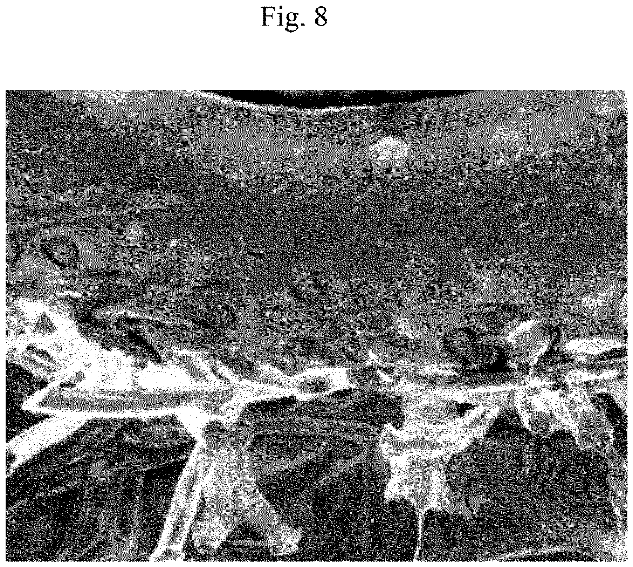

By the above described procedures, a sheet-shaped heater 31 shown in Fig. 2 can be obtained. Here, Fig. 7 and Fig. 8 are SEM images (Scanning Electron Microscope) showing the heat fused state between the cord-shaped heater and the substrate in the sheet-shaped heater of the present embodiment. The magnification ratio is 100 times in Fig. 7 and 200 times in Fig. 8. As shown in Fig. 7 and Fig. 8, the heat fusion layer 9 of the cord-shaped heater 1 was deformed and fluidized by the heating and pressing while keeping necessary thickness. In addition a part of the heat fusion layer 9 entered into gaps (porosities) of the substrate 11 so as to entrain the fiber forming the substrate 11. Consequently, the cord-shaped heater 1 and the substrate 11 are firmly adhered to each other. In particular, when the substrate 11 is the nonwoven fabric including the heat-fusing fiber, the heat-fusing fiber has the core-sheath structure and the sheath portion has low melting point, the sheath portion and the heat fusion layer 9 of the cord-shaped heater are adhered to each other and integrated while surrounding the core portion. Consequently, the cord-shaped heater 1 and the substrate 11 are more firmly adhered to each other. In addition, the insulation layer 7 of the cord-shaped heater 1 was not almost deformed by the heating and pressing and not entered into gaps (porosities) of the substrate 11. Thus, the insulation layer 7 almost kept an original shape (i.e., circular cross-sectional shape).

By the above described procedures, the sheet-shaped heater 31 shown in Fig. 1 can be obtained. When the sheet-shaped heater 1 of the present invention is used as a vehicle seat heater, cords are connected to both ends of the cord-shaped heater 1 and a temperature controller 39. In addition, the cord-shaped heater 10, the temperature controller 39 and the connector 35 are connected with each other by the cords. The cord-shaped heater 1 is connected to a not illustrated electric system of the vehicle via the connector 35.

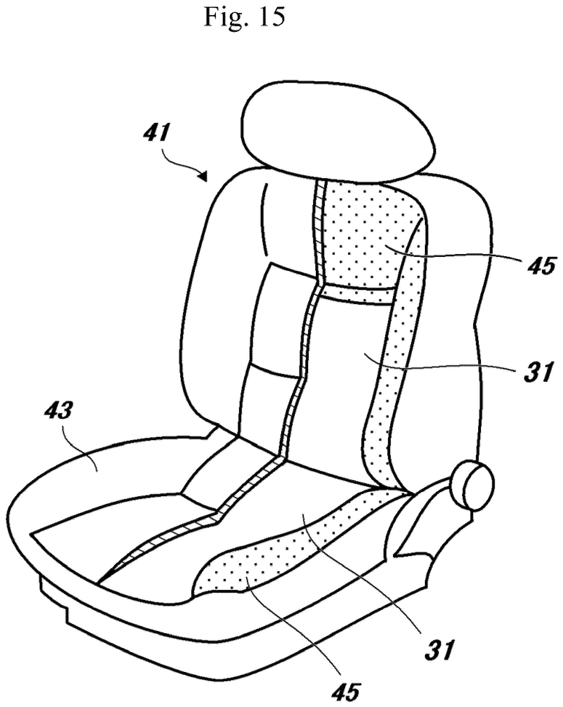

The sheet-shaped heater 31 having the above described configurations can be embedded and arranged in a vehicle seat 41 in a state shown in Fig. 15. Namely, as described above, the sheet-shaped heater 31 is stuck to a skin cover 43 or a seat pad 45 of the vehicle seat 41.

As examples, the adhesion strength between the cord-shaped heater 1 and the substrate 11 was measured for the sheet-shaped heater 31 obtained as described above. As for the measurement method of the adhesion strength, the cord-shaped heater 1 was fixed by a push-pull gauge, the cord-shaped heater 1 was pulled in the direction of 180° with respect to the arrangement direction of the cord-shaped heater 1, and a load required for peeling the cord-shaped heater 1 from the substrate 11 was measured. Thus, the evaluation was carried out. The above described test was performed by holding the temperature of the sheet-shaped heater 31 at ordinary temperature (20°C), 50°C, 70°C, 90°C, 110°C, 120°C and 130°C for one minute and in a state of keeping the temperature. Although the polyamide-based thermoplastic elastomer (TPA) is used for the heat fusion layer 9 in the embodiment, the test was similarly performed by using a low density polyethylene (LDPE) as a comparative example 1, using a linear low density polyethylene (LLDPE) as a comparative example 2 and using a polyester-based thermoplastic elastomer (TPEE) as a comparative example 3. The measurement results are shown in Table 1.

[Table 1]

|  |  | Embodiment | Comparative example 1 | Comparative example 2 | Comparative example 3 |
|---|---|---|---|---|---|
| Heat fusion layer | | TPA | LDPE | LLDPE | TPEE |
| Melting temperature (°C) | | 159 | 106 | 123 | 162 |
| Peeling strength (kgf) | ordinary temperature | 6.05 | 1.74 | 4.57 | 0.92 |
| | 50°C | 4.66 | 1.1 | 3.57 | 0.4 |
| | 70°C | 3.52 | 0.6 | 3.18 | 0.13 |
| | 90°C | 2.61 | 0.18 | 1.81 | 0.11 |
| | 110°C | 1.91 | 0.03 | 0.9 | 0.05 |
| | 120°C | 2.29 | 0.04 | 0.25 | 0.07 |
| | 130°C | 1.61 | --- | 0.04 | 0.06 |

When the sheet-shaped heater 31 of the present invention is used as a vehicle seat heater, the peeling strength of 1 kgf or more is required for preventing the cord-shaped heater from being peeled or displaced even if the cord-shaped heater receives an external force when the occupant sits on the seat or releases from the seat. In the sheet-shaped heater 31 of the present embodiment, the peeling strength of 1 kgf or more was maintained even under the high temperature of 130 °C. On the other hand, the adhesion of the heat fusion layer could not be maintained and the peeling strength was less than 1 kgf at 70°C in the sheet-shaped heater of the comparative example 1 and at 110°C in the sheet-shaped heater of the comparative example 2. Furthermore, the peeling strength was less than 1 kgf at the ordinary temperature in the sheet-shaped heater of the comparative example 3.

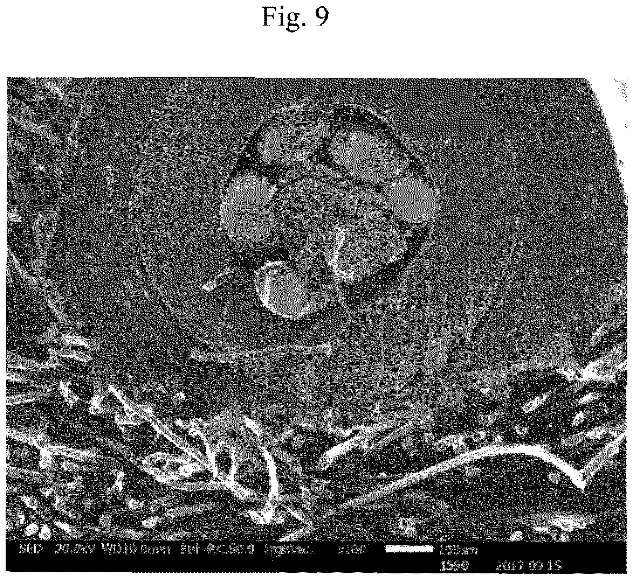

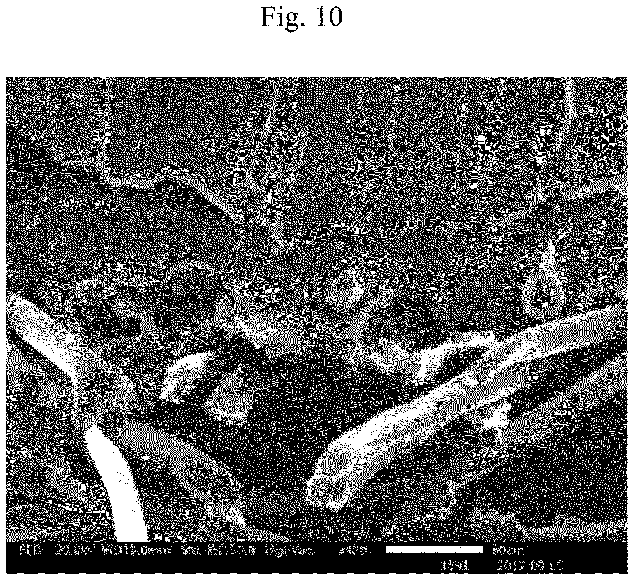

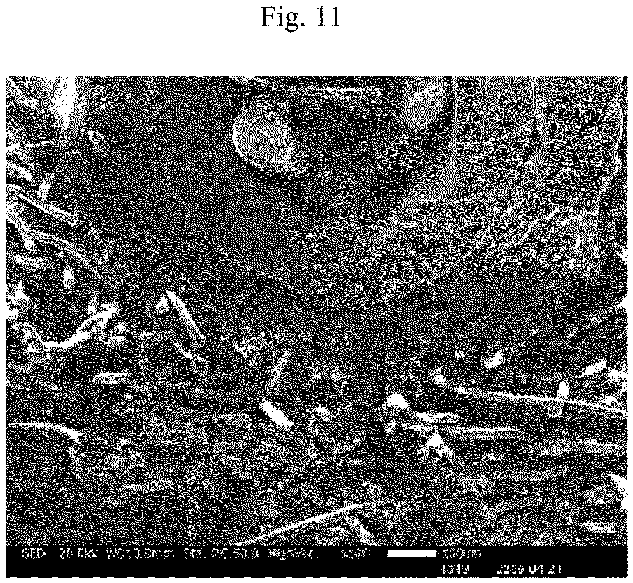

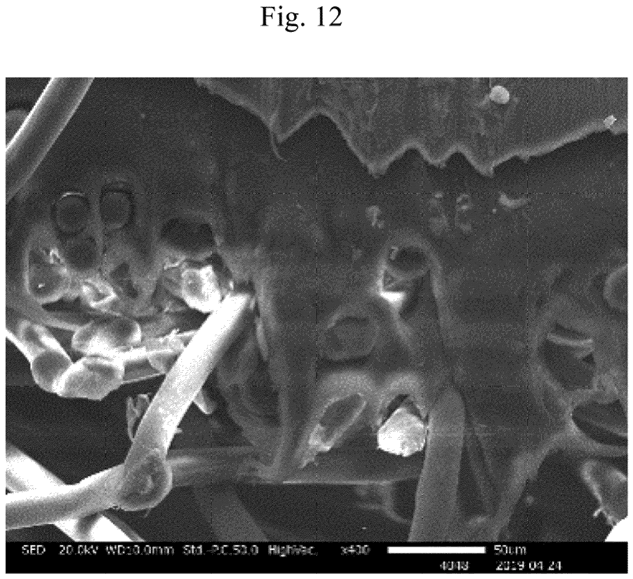

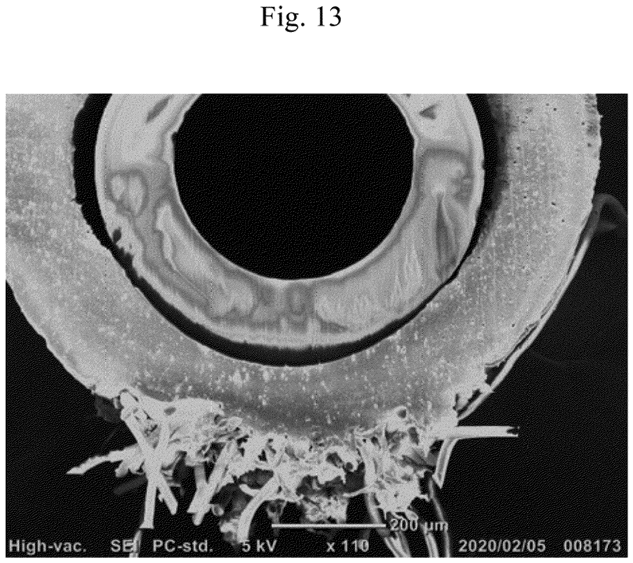

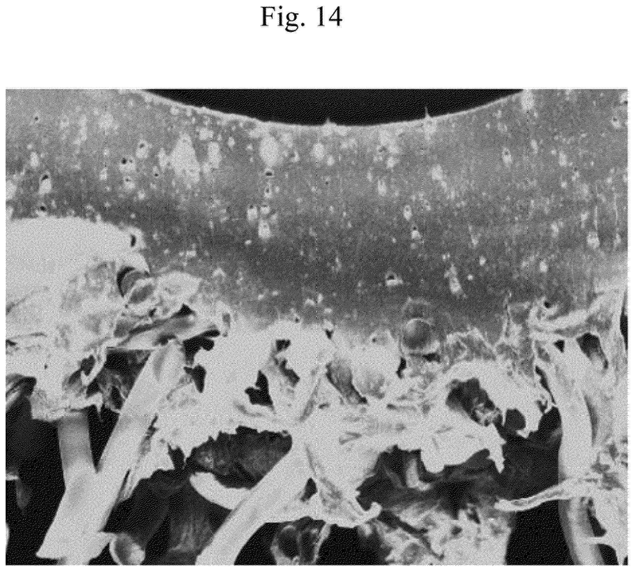

Fig. 9 and Fig. 10 are SEM images showing the heat fused state between the cord-shaped heater and the substrate in the sheet-shaped heater of the comparative example 1. Fig. 11 and Fig. 12 are SEM images showing the heat fused state between the cord-shaped heater and the substrate in the sheet-shaped heater of the comparative example 2. Fig. 13 and Fig. 14 are SEM images showing the heat fused state between the cord-shaped heater and the substrate in the sheet-shaped heater of the comparative example 3. The magnification ratio is 100 times in Figs. 9, 11 and 13 and 200 times in Fig. 10, 12 and 14. As shown in Fig. 9 and Fig. 10, it is considered that the shape was deformed and the thickness became thinner by the heating and pressing and thus the peeling strength was further deteriorated since the melting temperature of the heat fusion layer of the comparative example 1 is low. As shown in Fig. 11 and Fig. 12, although the heat fusion layer of the comparative example 2 had enough thickness, it is considered that the heat fusion layer began to soften at the temperature around over 100°C and enough peeling strength could not be obtained at high temperature since the melting temperature is low. As shown in Fig. 13 and Fig. 14, although the heat fusion layer of the comparative example 3 also had enough thickness, the heat fusion layer could not entrain the fiber forming the substrate sufficiently. Accordingly, it is considered that the fiber peeled from the heat fusion layer even at ordinary temperature and enough peeling strength could not be obtained. As for the sheet-shaped heater of the comparative example 3, it is possible to increase the temperature of the heating and pressing while lowering the viscosity of the heat fusion layer during the heat fusion for increasing the peeling strength, for example. However, other problems occur in such a case. For example, the substrate is shrunk by heat or the fiber forming the substrate is thermally deteriorated.

Namely, it is understood that the adhesiveness at high temperature cannot be necessarily increased merely by increasing the melting temperature of the heat fusion layer.

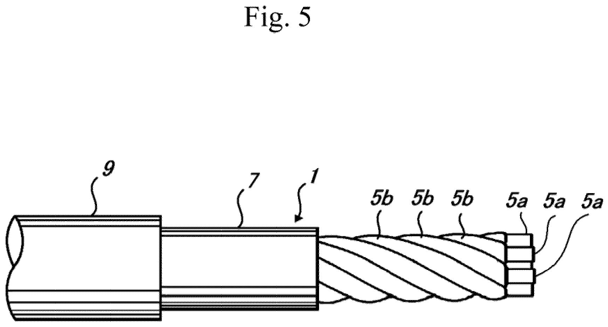

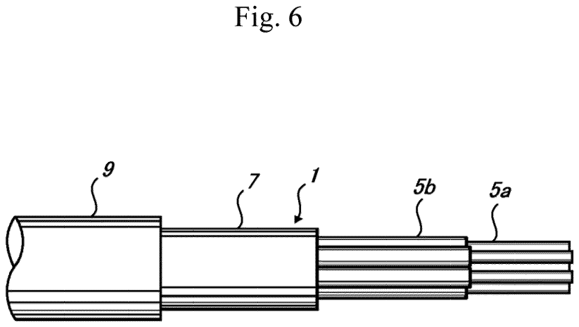

Note that the present invention is not limited to the above described embodiment. Regarding the configuration of the cord-shaped heater 1, as an example, the cord-shaped heater 1 can be formed by twisting or arraying a plurality of conductive wires 5a covered with the insulating film 5b together, winding the twisted or arrayed conductive wires 5a around the core wire 3, and forming the insulation layer 7 and the heat fusion layer 9 around an outer periphery of the wound conductive wires 5a as described in the above described embodiment (shown in Fig. 1). As another example, the cord-shaped heater 1 can be formed by twisting a plurality of conductive wires 5a covered with the insulating film 5b together without using the core wire 3 (shown in Fig. 5). As another example, the cord-shaped heater 1 can be formed by arraying a plurality of conductive wires 5a covered with the insulating film 5b together (shown in Fig. 6).

It is also possible not to form the insulating film 5b on the conductive wires 5a. For example, the embodiment where the insulating film 5b is not formed on all of the conductive wires 5a, the embodiment where the conductive wires 5a covered with the insulating film 5b and the conductive wires 5a not covered with the insulating film 5b are alternatively arranged, and the embodiment where only some of the conductive wires 5a are covered with the insulating film 5b are possible. Various configurations other than the above described examples are also possible. In addition, the core wire 3 and the conductive wires 5a can be twisted together.

As the core wire 3, as an example, a fiber formed by covering a thermoplastic polymer material around a core material described below can be used. The core material can be a monofilament, a multifilament or a spun of inorganic fibers such as a glass fiber or organic fibers such as a polyester fiber (e.g. polyethylene terephthalate), an aliphatic polyamide fiber, an aromatic polyamide fiber and a wholly aromatic polyester fiber. The core material can also be a fiber material of the above described fibers or an organic polymer material constituting the fiber material. If the core wire 3 having a heat-shrinkable property and a heat-melting property is used, even when the conductive wires 5a is disconnected, the core wire is melted, cut and simultaneously shrunk by the overheat, the wound conductive wires 5a also follow the function of the core wire 3. Thus, both ends of the disconnected conductive wires 5a are separated with each other. Therefore, the ends of the disconnected conductive wires are prevented from being repeatedly contacted and separated with each other, and prevented from being contacted by a small contact area such as a point contact. Thus, the overheating can be prevented. If the conductive wires 5a are insulated by the insulating film 5b, there is no need to carefully select the insulating material of the core wire 3. For example, a stainless steel wire or a titanium alloy wire can be used. However, considering the situation that the conductive wires 5a are disconnected, the core wire 3 is preferred to be the insulating material.

Regarding the conductive wires 5a, conventionally known materials can be used. For example, a copper wire, a copper alloy wire, a nickel wire, an iron wire, an aluminum wire, a nickel-chromium alloy wire, an iron-chromium alloy wire and a SUS wire (stainless steel wire) can be used. As the copper alloy wire, for example, a tin-copper alloy wire, copper-nickel alloy wire, and a silver containing copper alloy wire can be used. In the silver containing copper alloy wire, copper solid solution and silver-copper eutectic alloy are in a fiber shape. From the above listed materials, the copper wire and the copper alloy wire are preferred to be used in the viewpoint of a balance between the cost and characteristics. Regarding the copper wire and the copper alloy wire, although both soft and hard materials exist, the hard material is more preferable than the soft material in the viewpoint of bending resistance. Note that the hard copper wire and the hard copper alloy wire are made by stretching individual metal crystal grains long in a machining direction by cold working such as drawing processing to form a fibrous structure. If the above described hard copper wire and hard copper alloy wire are heated at a temperature higher than a recrystallization temperature, processing strains generated in the metal crystal are removed and crystal nuclei begin to appear to serve as a base of new metal crystal. The crystal nuclei are developed, then recrystallization, which is a process of replacing old crystal grains with new metal crystal grains, occurs sequentially, and then the crystal grains are developed. The soft copper wire and the soft copper alloy wire are materials containing such crystal grains in a developed state. The soft copper wire and the soft copper alloy wire have higher stretchability and higher electric resistance but have lower tensile strength compared to the hard copper wire and the hard copper alloy wire. Therefore, the bending resistance of the soft copper wire and the soft copper alloy wire are lower than those of the hard copper wire and the hard copper alloy wire. As explained above, the hard copper wire and the hard copper alloy wire are changed to the soft copper wire and the soft copper alloy wire having lower bending resistance by heat treatment. Therefore, the heat history is preferred to be as less as possible when processing. Note that the hard copper wire is also defined in JIS-C3101 (1994) and the soft copper wire is also defined in JIS-C3102 (1984). In the definition, the soft copper wire is defined to have 15% or more growth in the outer diameter of 0.10 to 0.26 mm, 20% or more growth in the outer diameter of 0.29 to 0.70 mm, 25% or more growth in the outer diameter of 0.80 to 1.8 mm, and 30% or more growth in the outer diameter of 2.0 to 7.0 mm. In addition, the copper wire includes wires to which tin-plating is applied. The tin-plated hard copper wire is defined in JIS-C3151 (1994), and the tin-plated soft copper wire is defined in JIS-C3152 (1984). Furthermore, various shapes can be used as a cross sectional shape of the conductive wires 5a. Without being limited to wires having a circular cross section, although they are ordinary used, so-called a rectangular wire can be also used. Regarding the SUS wire, as an example, hard SUS wire (e.g., SUS304WPA) and soft SUS wire (e.g., SUS304W1) and the like can be used. In addition, the wire formed by combining the above described materials or the wire formed by twisting one of the above described materials can be also used.

However, when the conductive wires 5a are wound around the core wire 3, the material of conductive wires 5a is preferred to be selected from the above described materials of the conductive wires 5a so that an amount of spring-back is suppressed and a recovery rate is 200% or less. For example, if the silver containing copper alloy in which fiber shaped copper solid solution and silver-copper eutectic alloy are included is used, although tensile strength and bending resistance are excellent, spring-back is easily caused when it is wound. Therefore, the silver containing copper alloy is not preferred because the conductive wires 5a is easily floated when the conductive wires 5a is wound around the core wire 3 and the conductive wires 5a is easily broken when excessive winding tension force is applied. In addition, winding habit is easily formed after the winding process. In particular, when the insulating film 5b is coated on the conductive wires 5a, the recovery rate of the insulating film 5b is also added. Therefore, it is important that conductive wires 5a having low recovery rate is selected so as to compensate the recovery force of the insulating film 5b.

Here, the measurement of the recovery rate defined in the present invention will be described in detail. At first, while a predetermined load is applied to the conductive wires, the conductive wires are wound more than three times around a cylinder-shaped mandrel having a diameter of 60 times larger than a diameter of the conductive wires so that the conductive wires are not overlapped with each other. After 10 minutes have passed, the load is removed, the conductive wires are removed from the mandrel, an inner diameter of the shape restored by elasticity is measured, and a rate of the spring-back of the conductive wires is calculated by the following formula (I) so that the calculated rate is evaluated as the recovery rate.

$$R = (d2/d1) \times 100 \quad \text{---} \quad (I)$$

Explanation of symbols:

R: recovery rate (%)
d1: diameter of mandrel used for winding test (mm)
d2: inner diameter of shape restored by releasing load after conductive wires are wound around mandrel (mm)

Regarding the insulating film 5b that is covered on the conductive wires 5a, a polyurethane resin, a polyamide resin, a polyimide resin, a polyamide imide resin, a polyester imide resin, a nylon resin, a polyester-nylon resin, a polyethylene resin, a polyester resin, a vinyl chloride resin, a fluorine resin, and a silicone can be used, for example. However, the materials that contain the silicon are preferable in the above listed materials. The silicone is a collective term of artificial polymeric compounds having a main framework structure formed by a siloxane bond. The silicone takes a form of a silicone resin and a silicone rubber (silicone elastomer), for example. An amount of a methyl group and a phenyl group as a substituent can be arbitrarily adjusted. Other substituents such as an ether group, a fluoroalkyl group, an epoxy group, an amino group, and a carboxyl group can be arbitrarily added. In addition, a mixture of the silicone and other polymeric materials or a copolymer of a polysiloxane and other polymeric components can be used. As an example, a so-called alkyd silicone, which is obtained by mixing the polyester resin and the silicone resin, or a so-called acrylic silicone, which is a graft copolymer of an acrylic polymer and a dimethyl polysiloxane, can be used. An amount of the silicone contained in the insulating film 5b is preferably within a specific range in various specific viewpoints. Note that, when using the copolymer of the silicone and other polymeric components, a weight of only the silicone in the copolymer should be calculated as an amount of the silicone. If the amount of the silicone is insufficient, the insulating film 5b may be removed since the other components are pyrolyzed by the heat generated when the spark occurs. In addition, a bad influence may be given to an appearance. From the above described viewpoints, the content of the silicone is preferably 20% or more by a weight ratio, and can be 40% or more by a weight ratio. If the amount of the silicone is too much, wettability is reduced. This makes it difficult to be applied to the conductive wires 5a. Thus, an appearance may be affected. In addition, because of that, insulation performance of the insulating film 5b can be insufficient. From the above described viewpoints, the content of the silicone is preferably 90% or less by a weight ratio, and can be 80% or less by a weight ratio. In addition, a primer can be preliminary applied to the conductive wires 5a so that adhesion between the conductive wires 5a and the insulating film 5b is improved.

The above described insulating film 5b containing the silicone has excellent heat resistance, incombustibility, and chemical stability. Even if the insulating film 5b is subjected to high heat when the spark is generated, a silicon oxide film is formed and therefore an insulation can be maintained. Furthermore, a siloxane gas is generated by high heat when the spark is generated. Since the silicon oxide film is precipitated from the siloxane gas at an end surface of the conductive wires and the end surface is insulated, the spark can be prevented after that. The silicone as describe above is coated on the conductive wires 5a to be served as the insulating film 5b by applying the silicone on the conductive wires 5a in a state that the silicone is dissolved or dispersed in a solvent, a solvating media such as water, or a dispersion media and then drying it, or by forming the silicon on an outer periphery of the conductive wires 5a using a forming means such as an extrusion molding, for example. The extrusion molding of the silicone can be performed at a relatively constant temperature. However, when applying the silicone dissolved or dispersed in the solvent, the water or other media, the silicon is exposed to a relatively high temperature environment so that drying is finished shortly. As explained above, the conductive wires 5a made of the copper wire and the copper alloy wire change its characteristics between soft and hard by the heat history. Therefore, considering this point, the method of forming the insulating film 5b should be selected. In addition, when forming the insulating film 5b, a thickness of the insulating film 5b can be thinner when the silicon resin is applied compared to the extrusion molding. As a result, a diameter of the cord-shaped heater can be thinner.

A thickness of the insulating film 5b is preferably 3 to 30% of the diameter of the conductive wires 5a. If the thickness is less than 3%, voltage resistance is insufficient and therefore an individual coating of the conductive wires 5a may become meaningless. If the thickness exceeds 30%, it becomes difficult to remove the insulating film 5b when connection terminals are press-bonded, and the cord-shaped heater becomes unnecessarily thick.

When winding the conductive wires 5a around a core material 3 in a state of being arrayed together or twisted together, the arrayed state is more preferable than the twisted state. This is because the diameter of the cord-shaped heater becomes smaller and a surface becomes smooth. In addition to the arrayed state and the twisted state, the conductive wires 5a can be braided on the core material 3.

In the cord-shaped heater of the present invention, the insulation layer 7 is preferably formed on an outer periphery of the conductive wires 5a. If, by any chance, the conductive wires 5a is disconnected, power supply to other members are insulated by the insulation layer 7. Furthermore, even when the spark occurs, generated heat of high temperature is insulated. When forming the insulator layer 7, the method of forming it is not particularly limited. For example, the extrusion molding can be used, and the insulator layer 7 can be preliminary formed in a tubular shape to be covered on the conductive wires 5a. If the insulator layer 7 is formed by the extrusion molding, a position of the conductive wires 5a is fixed. Since friction and bending caused by positional misalignment of the conductive wires 5a can be prevented, bending resistance is improved. Therefore, the extrusion molding is preferred. Materials forming the insulation layer 7 can be arbitrarily specified according to usage pattern and usage environment of the cord-shaped heater. For example, various resins such as a polyolefin-based resin, a polyester-based resin, a polyurethane-based resin, aromatic polyamide-based resin, an aliphatic polyamide-based resin, a vinyl chloride resin, a modified-Noryl resin (polyphenylene oxide resin), a nylon resin, a polystyrene resin, a fluororesin, a synthetic rubber, a fluororubber, a thermoplastic polyethylene elastomer a thermoplastic polyurethane elastomer and a thermoplastic polyester elastomer can be used. In particular, a polymer composition having flame retardancy is preferably used. Here, the polymer composition having flame retardancy means the polymer composition having an oxygen index of 21 or more in the flame retardant test defined in JIS-K7201 (1999). The polymer composition having the oxygen index of 26 or more is especially preferred. In order to obtain the above described flame retardancy, a flame retardant material or other material can be arbitrarily added to the material forming the above described insulator layer 7. As for the flame retardant material, metal hydrates such as a magnesium hydroxide and an aluminum hydroxide, an antimony oxide, a melamine compound, a phosphorus compound, a chlorine-based flame retardant, and a bromine-based flame retardant can be used, for example. A surface treatment can be arbitrarily applied to the above described flame retardant materials by a conventionally known method.

Since the heat fusion layer 9 is formed on the outer periphery of the insulation layer 7, the cord-shaped heater 11 can be heat-fused with the substrate 11 by heating and pressing. As for the material for forming the heat fusion layer 9, the same materials as the above described materials forming the insulation layer 7 can be used. In the above described materials, an aliphatic polyamide-based polymer material is preferred since it has an appropriate melting temperature and the adhesiveness is excellent at high temperature. The aliphatic polyamide is called as a nylon The nylon includes n-nylon synthesized by the polycondensation reaction of ω-amino acid and n, m-nylon synthesized by the co-condensation polymerization of diamine and dicarboxylic acid. Regarding the n-nylon, nylon 6, nylon 11, nylon 12 and the like can be used. Regarding the n, m nylon, nylon 66, nylon 610, nylon 6I, nylon 6T, nylon 9T, nylon M5T and the like can be used. In addition, the polyamide-based thermoplastic elastomer which is a thermoplastic elastomer containing the polyamide can be also used. A block copolymer using the polyamide as a hard segment and using the polyether as a soft segment is known as the polyamide-based thermoplastic elastomer. Regarding the polyamide used as the hard segment, various types can be considered. For example, the aromatic polyamide such as a para-aramid and a meta-aramid can be used in addition to the above described aliphatic polyamide. Regarding the polyether used as the soft segment, various types can be considered. For example, a polyalkylene ether glycol such as a polyethylene glycol, a poly (1,2- and 1,3-) propylene ether glycol, a polytetramethylene ether glycol and a polyhexamethylene ether glycol, a block copolymer or a random copolymer of an ethylene oxide and a propylene oxide, a block copolymer or a random copolymer of an ethylene oxide and a tetrahydrofuran, substances containing dihydric phenols such as a bisphenol A and a hydroquinone and the like can be used. In the above described materials, the polyamide-based thermoplastic elastomer is preferable since the adhesiveness is particularly excellent at high temperature and the compatibility is good in terms of the melting temperature and the adhesiveness when the nonwoven fabric of the polyester fiber is used for the substrate. The block copolymer of the aliphatic polyamide and the polyalkylene ether glycol is more preferred. The block copolymer of the nylon 11 or the nylon 12 and the polytetramethylene ether glycol is particularly preferred. Note that the adhesion strength between the cord-shaped heater 1 and the substrate 11 is extremely important when the cord-shaped heater 1 and the substrate 11 are heat-fused to each other.

As described above, the aliphatic polyamide-based polymer material is preferably used for the heat fusion layer 9 of the present invention. However, various materials can be added as long as the property of the aliphatic polyamide-based polymer material (i.e., the property having an appropriate melting temperature and the adhesiveness at high temperature) is not obstructed. For example, various additives such as a metallic hydrate (e.g., magnesium hydroxide, aluminum hydroxide), an antimony oxide, a melamine compound, a phosphorus compound, a flame retardant (e.g., chlorine-based flame retardant, bromine-based flame retardant), an antioxidant, a metal inactivating agent, a filler, a lubricant, a filler, a dispersant and a colorant can be appropriately added. In addition, for example, various polymer materials such as a polyolefin-based resin, a polyester-based resin, a polystyrene resin, a thermoplastic polyethylene elastomer, a thermoplastic polyurethane elastomer and a thermoplastic polyester elastomer can be added as long as the property is not affected.

When adding the above described additives, 10 to 30 pts.wt. of the flame retardant is added to 100 pts.wt. of the resin or the rubber material, for example. Thus, excellent flame retardancy can be imparted while keeping excellent adhesiveness. In addition, the above described various additives can be added in the form of masterbatch.

The cord-shaped heater 1 of the present invention preferably has a temperature region where the heat fusion layer 9 is fluidized and the insulation layer 7 is not fluidized. Consequently, the shape of the insulation layer 7 is not almost deformed and enough insulation performance can be maintained when the heat fusion layer 9 is adhered by heating and pressing, for example. As an example of "the temperature region where the heat fusion layer 9 is fluidized and the insulation layer 7 is not fluidized," the melting temperature of the insulation layer 7 can be higher than the melting temperature of the heat fusion layer 9 when both the insulation layer 7 and the heat fusion layer 9 have the melting temperature. When one of the insulation layer 7 and the heat fusion layer 9 does not have a clear melting temperature, the Vicat softening temperature of the insulation layer 7 can be higher than the Vicat softening temperature of the heat fusion layer 9. The melting temperature or the Vicat softening temperature of the insulation layer 7 is preferably 170°C to 250°C. The melting temperature or the Vicat softening temperature of the heat fusion layer 9 is preferably 95°C to 185°C. The difference between the melting temperature of the insulation layer 7 and the melting temperature of the heat fusion layer 9 or the difference between the Vicat softening temperature of the insulation layer 7 and the Vicat softening temperature of the heat fusion layer 9 is preferably 50 to 100°C. When the insulating film 5b is formed on the conductive wires 5a, the melting temperature or the Vicat softening temperature of the insulation layer 7 is preferably lower than the melting temperature of the insulating film 5b. In particular, the melting temperature of the heat fusion layer 9 is preferably 140°C to 170°C. If the melting temperature is too low, there is a risk of peeling at high temperature. If the melting temperature is too high, there is a risk that the cord-shaped heater 1 is not sufficiently adhered and fixed to the substrate. In addition, the Vicat softening temperature of the heat fusion layer 9 is preferably 120°C or more and particularly preferably 130°C or more. If the Vicat softening temperature is too low, there is a risk that the heat fusion layer 9 flows and peels at high temperature. In addition, the thickness of the heat fusion layer 9 is preferably 0.05 to 0.3 mm. If the thickness of the heat fusion layer 9 is too small, material destruction of the heat fusion layer 9 may occur when an external force is received. In such a case, sufficient peeling strength may not be obtained. If the thickness of the heat fusion layer 9 is too large, the outer diameter of the cord-shaped heater 10 becomes large. Thus, an outer appearance of the sheet-shaped heater may be affected or adverse effects may arise in the arrangement of various devices. Note that the Vicat softening temperature can be measured by the method described in JIS-K7206 (2016).

Other layers can be arbitrarily formed on the outer periphery of the conductive wires 5a in addition to the insulation layer 7 and the heat fusion layer 9. When the layers are three or more, the outermost layer is the heat fusion layer 9 and the layer immediately inside the outermost layer is the insulation layer 7. In addition, the insulation layer 7 and the heat fusion layer 9 are not necessarily formed continuously in a length direction. For example, the insulation layer 7 and the heat fusion layer 9 can be formed linearly or spirally along the length direction of the cord-shaped heater 10, formed in a dot pattern, or formed intermittently. However, the insulation layer 7 and the heat fusion layer 9 are preferably formed continuously in a length direction from the viewpoint of the adhesion strength.

In the present embodiment, the insulation layer 7 is used. However, it is also possible to form the heat fusion layer 9 directly on the outer periphery of the conductive wires 5a without forming the insulation layer 7.

When a bending-resistance test, which is performed by repeatedly bending in an angle of 90° with a radius of curvature of 6 times of the self-diameter, is performed for the cord-shaped heater 10 obtained above, the number of bending until the break of at least one of the conductive wires is preferably 20,000 times or more.

The substrate 11 is not limited to the nonwoven fabric formed of the polyester fiber. For example, various polymeric foams such as a foamed resin sheet made of a foamed polyurethane resin or the like and a foamed rubber sheet can be used as the substrate 11. The material having gaps and having stretchability are particularly preferred. It is preferred that the hardness is adjusted so that the unevenness of the cord-shaped heater does not appear on the surface. The hardness can be adjusted by adjusting a foaming rate, switching the state of the cells between closed cells and open cells, or using the material having the hardness suitable for the purpose, for example. The material can be arbitrarily selected from various resins, rubbers and thermoplastic elastomers such as a polyurethane resin, a chloroprene rubber, a silicone resin, a silicone rubber, a neoprene rubber, a diene rubber, a nitrile rubber, a natural rubber, a polyethylene resin, a polypropylene resin, and an ethylene-vinyl acetate copolymer. In the above described materials, the polyurethane resin and the thermoplastic polyurethane elastomer are preferable since the compatibility is good in terms of the adhesion to the heat fusion layer 9.

When a fibrous material is used for the substrate 11, cloth materials such as a woven fabric and a knit fabric can be also used instead of the nonwoven fabric. When the cloth materials are used, the kind of the fiber to be used can be arbitrarily selected from various kinds of fibers. However, it is preferred to add a heat-fusing fiber or the fiber made of the same type of material as the heat fusion layer 9 of the cord-shaped heater 1 for increasing the adhesiveness between the cord-shaped heater 1 and the substrate 11 In particular, the nonwoven fabric is especially preferred to be used for the car seat heater because the nonwoven fabric has a good touch feeling and is soft. The fiber having the core-sheath structure is used as the heat-fusing fiber where the low-melting polyester is used as the sheath component. Other than this, a low-melting polypropylene or a polyethylene can be used as the sheath component in the core-sheath structure of the fiber, for example. When the above described heat-fusing fiber is used, a sheath portion of the heat-fusing fiber and the outer-layer covering 9 are fused together and integrated in a state of surrounding a core portion of the heat-fusing fiber. Thus, the adhesion between the cord-shaped heater 1 and the nonwoven fabric becomes very strong. Regarding the flame retardant fiber, in addition to the above described flame retardant polyester, various flame retardant fibers can be used. Here, the flame retardant fiber means the fiber satisfying the requirements JIS-L1091 (1999). When the above described flame retardant fiber is used, an excellent flame retardancy is applied to the substrate.

A mixture ratio of the heat-fusing fiber is preferably 5% or more and 20% or less. If the mixture ratio of the heat-fusing fiber is less than 5%, the adhesiveness is insufficient. If the mixture ratio of the heat-fusing fiber exceeds 20%, the nonwoven fiber becomes hard. That causes a feeling of strangeness to a seated person, and reduces the adhesiveness to the cord-shaped heater instead. Furthermore, the substrate is shrunk by the heat of the heat-fusion, and dimensions intended in the product design may not be obtained. The mixture ratio of the flame retardant fiber is 70% or more, and is preferably 70% or more and 95% or less. If the mixture ratio of the flame retardant fiber is less than 70%, the flame retardancy is insufficient. If the mixture ratio of the flame retardant fiber exceeds 95%, the mixture ratio of the heat-fusing fiber is relatively insufficient and the adhesiveness is insufficient. Note that a sum of the mixture ratio of the heat-fusing fiber and the mixture ratio of the flame retardant fiber is not necessarily 100%. Other fibers can be arbitrarily mixed. Even if the heat-fusing fiber is not mixed, sufficient adhesiveness can be obtained by, for example, using similar types of materials both for the material of the heat fusion layer and the material of the fiber forming the substrate. Therefore, it can be reasonably assumed that the heat-fusing fiber is not mixed.

A size, a thickness and other conditions of the nonwoven fabric are arbitrarily changed according to the usage. However, the thickness (a value measured in a dried condition) is preferably approximately 0.6 mm to 1.4 mm. By using the nonwoven fabric having the above described thickness, when the cord-shaped heater and the nonwoven fabric are adhered and fixed with each other by heating and pressing, the nonwoven fabric adheres with 30% or more, preferably 50% or more, of the outer periphery of the cord-shaped heater. Thus, the adhesion can be strong.

In addition, a plurality of substrates 11 can be used. The plurality of substrates 11 can be laminated in a multilayer state. In this case, the materials forming the plurality of substrate 11 can be different from each other. Because of this, the unevenness of the cord-shaped heater hardly appears on the surface. In addition, when the adhesive layer is formed so that the adhesive material does not enter into the gaps (e.g., cells) inside the substrate 11, the substrate 11 is not hardened, stretchability is not deteriorated, and touch feeling is not deteriorated. Thus, it is preferable.

The substrate 11 preferably includes gaps. In particular, it is preferred that more gaps are provided in a surface (hereafter, referred to as an arrangement surface) on which the cord-shaped heater 1 is arranged than another surface (hereafter, referred to as a non-arrangement surface) on which the cord-shaped heater 1 is not arranged. For example, in cloth materials such as a woven fabric and a nonwoven fabric, a state of having many gaps means a state of having a small unit weight, i.e. fiber weight per unit volume. In porous bodies such as a foamed resin sheet and a foamed rubber sheet, a state of having many gaps means a state of having a large porosity. For example, woven fabric or a nonwoven fabric formed by carrying out calendar processing on one side or both sides so that different strength are applied on each side by adjusting a temperature and a pressure, a nonwoven fabric formed by carrying out needle punching only from one side, a cloth body on which piles or raising are formed on one side, a foamed resin sheet or a foamed rubber sheet formed so that a porosity is gradually changed in a thickness direction, or materials formed by sticking materials having different porosities together can be used. In particular, the porosities of the substrate 11 are preferably continued. This is because the melted heat fusion layer penetrates in the continued porosities. Thus, anchor effect is increased and adhesive strength is improved. Regarding the state of continuing the porosities, cloth bodies, i.e. fiber aggregate, such as a woven fabric and a nonwoven fabric, and a foamed resin sheet or a foamed rubber sheet having continuous pores can be considered. When the substrate 11 having the porosities is used, it is enough for forming the porosities within the range into which the heat fusion layer 9 of the cord-shaped heater 1 enters. The materials not having porosities can be also used, for example.

When the cord-shaped heater 1 is arranged on the substrate 11, in addition to the embodiment of adhering and fixing by the fusion of heating and pressing, the cord-shaped heater 1 can be fixed on the substrate 11 by using other embodiments. For example, in order to set the temperature to be higher than the temperature of the normal usage, an embodiment of adhering and fixing the cord-shaped heater 1 with the substrate 11 by melting the heat fusion layer 9 using heat generated by energizing the cord-shaped heater 1, an embodiment of adhering and fixing the cord-shaped heater 1 with the substrate 11 by heating the conductive wires 5 and melting the heat fusion layer 9 by the heat generated by induction heating, an embodiment of adhering and fixing the cord-shaped heater 1 with the substrate 11 by melting the heat fusion layer 9 made of heat-fusing material using hot air, and an embodiment of sandwiching and fixing the cord-shaped heater 1 by a pair of substrates 11 while heating can be used. In addition, when heating and pressing the substrate 11, the hot pressing jig 15 can be also heated in addition to the press hot plate 27. At that time, the temperature of the press hot plate 27 can be made different from the temperature of the hot pressing jig 15 so that the compression ratios (i.e., porosities) of the substrate 11 are made different.

When the sheet-shaped heater 31 is adhered to heated material, an adhesive layer can be formed. For the adhesive layer, various materials can be used. For example, an adhesive layer formed of acrylic polymer adhesive material not using the tape substrate and an adhesive layer formed by forming adhesive material on both surfaces of a polypropylene film can be used. The adhesive layer preferably has flame retardancy satisfying the requirements of the combustion test of the automobile interior material of FMVSS No. 302 when the adhesive layer is independently used. Thus, flame retardancy is improved. In addition, the adhesive layer is preferably made only of the adhesive material not to deteriorate the stretchability of the sheet-shaped heater.

[Industrial applicability]

As explained above in detail, the present invention provides the cord-shaped heater having excellent adhesiveness at high temperature. The cord-shaped heater can be used as the sheet-shaped heater, for example by being arranged on the substrate such as a polymeric foam and a nonwoven fabric in a predetermined shape such as a meandering shape. The sheet-shaped heater can be suitably used for an electric blanket, an electric carpet, a car seat heater, a steering heater, a heated toilet seat, an anti-fog mirror heater, and a heating cooker, for example. In addition, as the single use of the cord-shaped heater, the cord-shaped heater can be wound and adhered around a pipe, a tank or the like, or can be installed inside the pipe, for example. Regarding the practical use, the cord-shaped heater can be suitably used as an antifreezing heater for a piping and a pipe drain of a freezer, a heat retaining heater for an air conditioner and a dehumidifier, a defrosting heater for a refrigerator and a freezer, a drying heater and a floor heating heater, for example. The cord-shaped heater of the present invention can be directly adhered to or directly wound around the heating objects in the above listed examples of the usage of the sheet-shaped heater: the electric blanket, the electric carpet, the car seat heater, the steering heater, the heated toilet seat, the anti-fog mirror heater, the heating cooker, and the floor heating heater.

[Description of the Reference Numerals]

1 cord-shaped heater
3 core material
5a conductive wires
5b insulating film
7 insulation layer
9 heat fusion layer
11 substrate
31 sheet-shaped heater

**Claims**

**1.** A cord-shaped heater, comprising:

a conductive wire; and
a heat fusion layer formed on an outer periphery of the conductive wire, wherein the heat fusion layer is formed of an aliphatic polyamide-based polymer material.

2. A cord-shaped heater, comprising:

a conductive wire; and
a heat fusion layer formed on an outer periphery of the conductive wire, wherein the heat fusion layer is a polyamide-based thermoplastic elastomer.

3. A sheet-shaped heater, wherein
the cord-shaped heater according to claim 1 or 2 is arranged on a substrate.

Fig. 1

Fig. 2

Fig. 3

Fig. 4

Fig. 5

Fig. 6

Fig. 7

Fig. 8

Fig. 9

SED 20.0kV WD10.0mm Std.-P.C.50.0 HighVac. x100 ▬ 100µm
1590 2017 09 15

Fig. 10

EP 4 124 173 A1

Fig. 11

Fig. 12

Fig. 13

Fig. 14

Fig. 15

**EP 4 124 173 A1**

<table>
<tr><td colspan="2" align="center">**INTERNATIONAL SEARCH REPORT**</td><td>International application No.<br>PCT/JP2021/005248</td></tr>
</table>

A. CLASSIFICATION OF SUBJECT MATTER
Int. Cl. H05B3/10(2006.01)i, H05B3/20(2006.01)i, G07C5/00(2006.01)i
FI: H05B3/20 347, G07C5/00 Z, H05B3/10 C

According to International Patent Classification (IPC) or to both national classification and IPC

B. FIELDS SEARCHED

Minimum documentation searched (classification system followed by classification symbols)
Int. Cl. G07C5/00, H05B3/10, H05B3/20

Documentation searched other than minimum documentation to the extent that such documents are included in the fields searched
Published examined utility model applications of Japan      1922-1996
Published unexamined utility model applications of Japan    1971-2021
Registered utility model specifications of Japan            1996-2021
Published registered utility model applications of Japan    1994-2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2014-143175 A (KURABE IND CO., LTD.) 07 August 2014, paragraphs [0011]-[0015], fig. 1, 5 | 1-3 |
| Y | WO 03/077041 A1 (GUNZE LTD.) 18 September 2003, description, p. 3, lines 11-16, p. 6, lines 13-15 | 1, 3 |
| Y | WO 2012/111719 A1 (BRIDGESTONE CORP.) 23 August 2012, paragraph [0009] | 2-3 |

☐ Further documents are listed in the continuation of Box C.   ☒ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search<br>26.02.2021 | Date of mailing of the international search report<br>23.03.2021 |
|---|---|
| Name and mailing address of the ISA/<br>    Japan Patent Office<br>    3-4-3, Kasumigaseki, Chiyoda-ku,<br>    Tokyo 100-8915, Japan | Authorized officer<br><br><br>Telephone No. |

Form PCT/ISA/210 (second sheet) (January 2015)

INTERNATIONAL SEARCH REPORT

Information on patent family members

International application No.

PCT/JP2021/005248

| Patent Documents referred to in the Report | Publication Date | Patent Family | Publication Date |
|---|---|---|---|
| JP 2014-143175 A | 07.08.2014 | US 2015/0336602 A1 paragraphs [0024]-[0028], fig. 1, 5 EP 2911471 A1 CN 104904312 A | |
| WO 03/077041 A1 | 18.09.2003 | US 2005/0063745 A1 paragraphs [0025], [0026], [0030] EP 1484650 A1 KR 10-2004-0095206 A CN 1625719 A | |
| WO 2012/111719 A1 | 23.08.2012 | US 2013/0319592 A1 paragraph [0011] EP 2676809 A1 CN 103370209 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4202071 B
- JP 61047087 A
- JP 2008311111 A
- JP 2010015691 A
- WO 2011001953 A
- WO 2014103981 A
- JP 2014143175 A
- JP 4118878 B